# EUROPÄISCHE PATENTSCHRIFT

(11) **EP 0 431 315 B1**
(45) Veröffentlichungstag und Bekanntmachung des Hinweises auf die Patenterteilung: **16.02.1994**
(21) Anmeldenummer: 90120997.3
(22) Anmeldetag: 02.11.1990
(51) Int. Cl.: B27K 3/52, B27K 3/50

(54) **Holzschutzmittel**
Wood preservative
Agent préservateur du bois

(30) Priorität: 11.11.1989 DE 3937658
(43) Veröffentlichungstag der Anmeldung: 12.06.1991
(73) Patentinhaber: Dr. Wolman GmbH, D-76547 Sinzheim (DE)
(72) Erfinder: Goettsche, Reimer, Dr., W-7570 Baden-Baden 19 (DE); Borck, Hans-Volker, W-7570 Baden-Baden (DE)
(74) Vertreter: Karau, Wolfgang, Dr.

(56) Entgegenhaltungen:
- EP-A- 0 238 051
- WO-A-82/03817
- FR-A- 2 255 849
- FR-A- 2 263 083

## Beschreibung

Die vorliegende Erfindung betrifft ein Holzschutzmittel mit Wirkung gegen Pilze und Termiten auf der Basis eines Kupfersalzes, eines Polyamins und eines Fettamins.

Wasserlösliche Holzschutzmittel auf der Basis von Bis-(N-Cyclohexyl-diazeniumdioxy)-Kupfer (Cu-HDO), Polyamin und einer komplexbildenden Carbonsäure sind bekannt, sie besitzen jedoch keine Wirksamkeit gegen Termiten (EP-A-234 461).

Ferner sind Holzschutzmittel auf der Basis einer Kupferverbindung, einer aliphatischen Carbonsäure und eines Polyamins bekannt (EP-A-270 848); ihre Wirksamkeit gegen Termiten ist nicht zufriedenstellend.

Die fungizide Wirksamkeit von Fettaminen, (z.B. Dimethylalkylamin), Tridemorph (N-Tridecyl-2,6-dimethylmproholin), Fenpropimorph (4-(3-para-t-butylphenyl)-2-methyl-propyl)-2,6-cis-dimethylmorpholin) ist bekannt (US-3 468 885, DE-27 52 135). Es ist ferner bekannt, Mischungen aus einer Kupferverbindung, einem Fettamin und einem Amin mit kurzer aliphatischer Kette als Holzschutzmittel zu verwenden (WO-A-82/03817).

Es wurde gefunden, daß wasserlösliche Holzschutzmittel auf der Basis von Kupfersalzen von Säuren (z.B. aliphatischer, wasserunlöslicher Carbonsäuren oder Bis-(N-Cyclohexyldiazeniumdioxy)-Kupfer), einem Polyamin (z.B. Dipropylentriamin) und einem Fettamin (z.B. N,N-Oimethyl-N-(C₁₂-C₁₄-alkyl)amin) und gegebenenfalls Tridemorph oder Fenpropimorph und gegebenenfalls einem Emulgator und gegebenenfalls einer komplexbildenden Carbonsäure, außer der Mischung aus Kupferhydroxid, N,N'-dioctyldiethylentriamin, N,N',N''-trioctyl-diethylentriamin, N-Lauryl-N,N-dimethyl-N-benzyl-ammoniumchlorid und Essigsäure neben der Wirksamkeit gegenüber Pilzen überraschend auch eine gute Wirksamkeit gegen Termiten besitzen.

Es können die Kupfersalze von z.B. C₅-C₂₀-Monocarbonsäuren wie Hexansäure, Heptansäure, Octansäure, Nonansäure, Decansäure, 2-Ethylheptansäure, Isooctansäure, Isononansäure, Isodecansäure, Versaticsäuren und Neocarbonsäuren (stark verzweigte Monocarbonsäuren) oder Polycarbonsäuren wie z.B. C₅-C₂₀-Dicarbonsäuren, z.B. Azelainsäure, Sebacinsäure, Decandicarbonsäure verwendet werden.

Statt der Kupfersalze können auch Mischungen der obengenannten Säuren oder der entsprechenden wasserlöslichen Alkali- oder Aminsalze mit wasserlöslichen oder wasserunlöslichen Kupferverbindungen wie z.B. Kupferacetat, Kupfersulfat, Kupferfluoroborat, Kupferhydroxid, Kupferoxid, Kupferhydroxycarbonat, Kupferborat, Kupferfluorid, Kupferfluorophosphat verwendet werden.

Ein Teil des Kupfers kann gegebenenfalls durch entsprechende Zinkverbindungen ausgetauscht werden.

Entsprechendes gilt für Cu-HDO, wo z.B. Mischungen von N-Cyclohexyldiazeniumdioxy-Kalium (K-HDO) mit den obengenannten Kupferverbindungen verwendet werden können.

Als Polyamine sind besonders geeignet z.B. aliphatische Polyamine, Alkylenpolyamine mit 3 bis 9 C-Atomen und 2 bis 4 N-Atomen, z.B. 1,3-Diaminopropan, 1-Methylamino-3-aminopropan, Dipropylentriamin, Tripropylentetramin, Ethylendiamin, Diethylentriamin, Triethylentetramin, Aminoethylethanolamin.

Die Fettamine entsprechen z.B. den allgemeinen Formeln 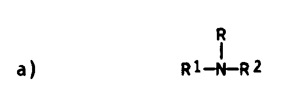 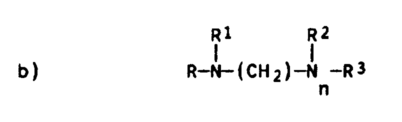 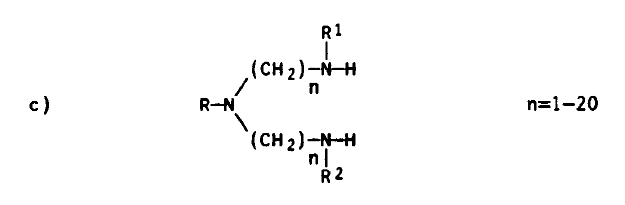
in denen
- R: C₆-C₂₀-Alkyl und/oder C₆-C₂₀-Hydroxyalkyl bedeuten und
- R¹: R², R³ unabhängig voneinander Wasserstoff oder niederes Alkyl (C₁-C₄-Alkyl) bedeuten oder die gleichen Bedeutungen wie R haben oder einen gegebenenfalls durch C₁-C₄-Alkyl oder Halogen substituierten Benzylrest bedeuten.

Die Fettamine können als Einzelstoffe oder als Mischungen eingesetzt werden.

Die Fettamine oder Tridemorph oder Fenpropimorph können insbesondere auch in Form von Salzen wasserlöslicher und/oder wasserunlöslicher Carbonsäuren und/oder Dicarbonsäuren verwendet werden z.B. Salzen der Essigsäure, Propionsäure, insbesondere 2-Ethylhexansäure, Isooctansäure, Isononansäure, Sebacinsäure. Entsprechend dem einzustellenden pH-Wert von Konzentrat und wässeriger Imprägnierlösung kann hierbei gegebenenfalls die Säure im Überschuß zugesetzt werden.

Die Salze können als Einzelstoffe oder als Mischungen, z.B. auch als Mischungen mit Fettaminen verwendet werden.

Geeignete Fettamine sind z.B. Dimethyl-(C₁₀-C₁₈)-alkylamine, Methyldioctylamin, Methyldidecylamin, Tridecylamin, Octyldiethanolamin, N,N'-Didodecyl-1,3-Propylendiamin, C₁₃-C₁₅-Alkyltrimethylendiaminlaurylpropylendiamin, N,N-Bis-(3-aminopropyl)-laurylamin.

Die Fettamine oder Tridemorph oder Fenpropimorph werden erforderlichenfalls unter zusätzlicher Verwendung von Emulgatoren in die Formulierungen (Konzentrate) oder ihre wässerigen Imprägnierlösungen eingearbeitet.

Es sind hierbei ionische und/oder nichtionische Emulgatoren geeignet, z.B. ethoxylierte Nonylphenole, ethoxylierte Monoalkylamine, quartäre Ammonium- und/oder Phosphoniumverbindungen.

Eine quartäre Ammoniumverbindung ist z.B. eine Verbindung entsprechend der allgemeinen Formel R¹R²R³R⁴N⁺Z⁻.
- R¹: einen Alkylrest mit 8 bis 20 Kohlenstoffatomen, insbesondere einen Alkylrest mit 12 bis 20 Kohlenstoffatomen oder einen Benzylrest bedeutet, der gegebenenfalls durch C₁- bis C₂0-Alkyl oder Halogen substituiert ist,
- R²: C₁- bis C₆-Alkyl, C₃- bis C₉-Alkoxyalkyl, EO bzw. PO n = 1 - 50
- R³: C₁- bis C₆-Alkyl, C₃- bis C₄-Alkoxy, EO bzw. PO n = 2 - 50
- R⁴: C₁- bis C₂0-Alkyl

bedeutet oder je zwei der Reste R¹ bis R⁴ zusammen mit dem Stickstoffatom einen heterocyclischen Rest bilden, der 4 bis 5 C-Atome, 1 bis 2 N-Atome und eine, zwei oder drei Doppelbindungen enthält, wobei die Kohlenstoffatome gegebenenfalls durch C₁- bis C₄-Alkyl oder Halogen substituiert sind und Z allgemein einen Säurerest bedeutet, z.B. den Rest einer anorganischen Säure (Salzsäure, Schwefelsäure, Phosphorsäure) oder den Rest einer organischen Carbonsäure (Essigsäure, Propionsäure).

Als wirksame Phosphoniumverbindungen eignen sich besonders Verbindungen der Formel

R₃¹R²P⁺Y⁻,

in der R¹ einen Alkylrest mit 1 bis 6 Kohlenstoffatomen, einen Hydroxyalkylrest mit 1 bis 6 Kohlenstoffatomen oder einen Phenylrest, R² einen Alkylrest mit 8 bis 18 Kohlenstoffatomen und Y einen Säurerest, insbesondere ein Halogenidanion, bedeutet.

Die Reste R¹ und R² sind vorzugsweise unverzweigt.

Die quartären Phosphoniumverbindungen können in den erfindungsgemäßen Konzentraten einzeln oder als Gemische vorhanden sein. Beispiele für derartige Phosphoniumverbindungen sind Trimethyl-n-dodecyl-phosphoniumchlorid, Triethyl-n-decylphosphoniumbromid, Tri-n-propyl-n-tetradecyl-phosphoniumchlorid, Trimethylol-n-hexadecyl-phosphoniumchlorid, Tri-n-butyl-n-tetradecylphosphoniumchlorid, Tri-n-butyl-n-dodecyl-phosphoniumbromid, Tri-n-butyl-n-decylphosphoniumchlorid, Tri-n-butyl-n-hexadecylphosphoniumbromid, Tri-n-hexyl-n-decyl-phosphoniumchlorid, Triphenyl-n-dodecylphosphoniumchlorid, Triphenyl-n-tetradecylphosphoniumbromid, Triphenyl-n-octadecylphosphoniumchlorid.

Bei Verwendung von Cu-HDO, K-HDO und Kupferverbidungen ist es für die bessere Eindringung vorteilhaft, zusätzlich eine komplexbildende Carbonsäure wie z.B. Nitrilotriessigsäure, Milchsäure oder Weinsäure einzusetzen.

Die Holzschutzmittel können gegebenenfalls weitere Verbindungen, z.B. eine Verbindung mit einem fungiziden Anion, beispielsweise eine Borverbindung, z.B. Alkaliborat, Aminborat, Borsäure; Fluoride, z.B. Kaliumfluorid; und/oder Salze der Fluoroborsäure und/oder Fluorophosphorsäure und/oder Difluorophosphorsäure enthalten.

Die erfindungsgemäßen Konzentrate enthalten im allgemeinen zwischen 1 bis 15 % (Gewichtsprozent) Kupfer, die wässerigen Imprägnierlösungen je nach Gefährdungsgrad des zu imprägnierenden Holzes 0,01 bis 2,0 % Kupfer.

Geeignete Konzentrate enthalten z.B.
- 2,5 - 50 %: Kupfersalz einer Säure
- 5,0 - 50 %: Polyamin
- 2,5 - 50 %: Fettamin oder seine Salze
- 0 - 35 %: Tridemorph, Fenpropimorph oder ihre Salze
- 0 - 30 %: eines fungizid wirksamen, diffundierenden Anions
- 0 - 50 %: eines Emulgators
- 0 - 25 %: einer komplexbildenden Carbonsäure,

wobei die Summe (Gew.-%) jeweils 100 % ergibt.

Das Gewichtsverhältnis Cu-HDO und/oder Kupfersalz einer wasserunlöslichen Mono- oder Polycarbonsäure zu Fettamin, Tridemorph oder Fenpropimorph liegt dabei z.B. zwischen 5 : 1 und 1 : 5.

Gegebenenfalls können untergeordnete Mengen an anderen Bestandteilen wie anderen Aminen, Ammoniak, Korrosionsinhibitoren und erforderlichenfalls Wasser und/oder polare wassermischbare Lösungsmittel enthalten sein, deren Anteile jedoch im allgemeinen gering gehalten werden können und die im wesentlichen der Handhabung dienen.

Die Erfindung erstreckt sich gleichermaßen auf die Konzentrate als auch auf die durch Verdünnen mit Wasser aus ihnen herstellbaren Imprägnierlösungen.

Der pH-Wert der Imprägnierlösungen liegt im allgemeinen zwischen 6 und 11, besonders häufig zwischen 7,5 und 9,5.

Bei der Herstellung der Holzschutzmittel, gegebenenfalls unter Wasserzusatz, entstehen hochkonzentrierte Pasten oder flüssige Konzentrate.

Zur Erweiterung des Wirkungsspektrums können zusätzliche Fungizide wie z.B. Organozinnverbindungen wie Tributylzinnverbindungen (TBT), z.B. Tributylzinnoxid (TBTO), TBT-HDO, TBT-versatoat, TBT-naphthenat, TBT-benzoat, eingearbeitet werden.

Die Anwendung der Imprägnierlösungen zum Schutz von Holz kann einerseits durch handwerkliche Verfahren wie z.B. Spritzen, Streichen, Tauchen, Trogtränken oder durch großtechnische Verfahren wie z.B. Kesseldruckverfahren, Vakuumverfahren erfolgen. Unter "Holz" sind sowohl massives Holz als auch Holzwerkstoffe, z.B. Spanplatten, Sperrholz, zu verstehen. Bei den Holzwerkstoffen empfiehlt es sich, die Imprägnierung durch das Leimuntermischverfahren vorzunehmen. Die Holzschutzmittel haben eine fungizide Wirkung, die der Wirkung bekannter Holzschutzmittel entspricht.

Die Erfindung wird an den folgenden Beispielen erläutert.

Der Nachweis der Wirksamkeit gegen Termiten erfolgte mit der aggressiven Termitenart Heterotermes indicola, welche ein aggressiveres Verhalten als die normalerweise zur Prüfung verwendete Termitenart zeigt.

Jeweils 5 Prüfklötzchen (15 x 25 x 50 mm) aus Kiefernsplintholz wurden imprägniert, nach einer Fixierzeit von 4 Wochen mehrmals mit Wasser ausgewaschen und jeweils 1 Prüfklötzchen nach weiteren 7 Tagen zur Termitenprüfung in ein Prüfgefäß gelegt. Zur Prüfung wurden 200 Tiere abgezählt und in das Prüfgefäß gesetzt. Jeweils im Abstand von 7 Tagen wurde die Aktivität der Termiten visuell geprüft. Bei nicht mehr vorhandener Aktivität wurden die Klötzchen aus dem Prüfgefäß herausgenommen und beurteilt und die Anzahl der überlebenden Termiten ermittelt. Bei noch vorhandener Aktivität der Tiere blieben die Klötzchen maximal 6 Wochen im Prüfgefäß, danach wurde der Angriff durch die Termiten visuell beurteilt.

### Vergleichsbeispiel A (nicht erfindungsgemäß) (Gew.-%)

25,0 % Cu-HDO
22,5 % Diethylentriamin
12,5 % Nitrilotriessigsäure
40,0 % Wasser.

Das Konzentrat wurde mit Wasser verdünnt, und zwar 2 Gew.-Teile Konzentrat und 98 Gew.-Teile Wasser (Anwendungskonzentration 2 %) oder 4 Gew.-Teile Konzentrat und 96 Gew.-Teile Wasser (Anwendungskonzentration 4 %).

### Ergebnisse der Termitenprüfung

2 % Anwendungskonzentration = 14,8 kg Konzentrat/m³
- Prüfzeitraum :: 6 Wochen
- Angriff :: Klötzchen stark befressen
- überlebende Tiere :: mehr als 150

4 % Anwendungkonzentration = 29,1 kg Konzentrat/m³
- Prüfzeitraum :: 6 Wochen
- Angriff :: Klötzchen stark befressen
- überlebende Tiere :: mehr als 150

### Vergleichsbeispiel B (nicht erfindungsgemäß)

13,50 % K-HDO
6,25 % Nitrilotriessigsäure
10,00 % Diethylentriamin
6,25 % Borsäure
4,00 % Cu(OH)₂CuCO₃
60,00 % Wasser
= 12,5 % Cu-HDO
4 % Anwendungskonzentration = 28,4 kg Konzentrat/m³
- Prüfzeitraum :: 6 Wochen
- Angriff :: Klötzchen stark befressen
- überlebende Tiere :: mehr als 150

### Vergleichsbeispiel C (nicht erfindungsgemäß)

13,3 % Kupferhydroxycarbonat
28,0 % Dipropylentriamin
10,0 % Borsäure
36,7 % Isooctansäure
12,0 % Wasser
4 % Anwendungskonzentration = 28,9 kg Konzentrat/m³
- Prüfzeitraum :: 6 Wochen
- Angriff :: Klötzchen benagt
- überlebende Tiere :: mehr als 50

### Vergleichsbeispiele D (nicht erfindungsgemäß)

10,0 % Kupfercarbonat
16,5 % 1,3-Diaminopropan
27,5 % 2-Ethylhexansäure
4,0 % Borsäure
2,5 % Nitrilotriessigsäure
5,0 % K-HDO
34,5 % Wasser

4 % Anwebdungskonzentration = 28,7 kg Konzentrat/m³
- Prüfzeitraum :: 6 Wochen
- Angriff :: Klötzchen benagt bis befressen
- überlebende Tiere :: mehr als 50

### Vergleichsbeispiel E (nicht erfindungsgemäß)

30 % Dimethyl-C₁₂-C₁₄-alkylamin
20 % Tridemorph
20 % 2-Ethylhexansäure
30 % ethoxyliertes Cocosfettamin (Dichte 0,96 g/cm³ bei 50°C)
2 % Anwendungskonzentration = 14,5 kg Konzentrat/m³
- Prüfzeitraum :: 6 Wochen
- Angriff :: Klötzchen benagt bis befressen
- überlebende Tiere :: mehr als 50

### Vergleichsbeispiel F (nicht erfindungsgemäß)

50 % Dimethyl-C₁₂-C₁₄-alkylamin
4 % Essigsäure
12 % Sebacinsäure
30 % ethoxyliertes Cocosfettamin
4 % Wasser
2 % Anwendungskonzentration = 14,6 kg Konzentrat/m³
- Prüfzeitraum :: 6 Wochen
- Angriff :: Klötzchen benagt bis befressen
- überlebende Tiere :: mehr als 100

### Erfindungsgemäße Beispiele

### Beispiel 1

10,1 % K-HDO
8,2 % Diethylentriamin
3,0 % Cu(OH)₂CuCO₃
4,7 % Nitrilotriessigsäure
4,7 % Borsäure
7,5 % Dimethyl-C₁₂-C₁₄-alkylamin
5,0 % ethoxyliertes Cocosfettamin
39,6 % Wasser
(= 9,4 % Cu-HDO)
4 % Anwendungskonzentration = 28,3 kg Konzentrat/m³
- Prüfzeitraum :: 2 Wochen
- Angriff :: kein Angriff
- überlebende Tiere :: 0

### Beispiel 2

6,75 % K-HDO
5,50 % Diethylentriamin
3,10 % Nitrilotriessigsäure
2,00 % Cu(OH)₂CuCO₃
25,00 % Dimethyl-C₁₂-C₁₄-Alkylamin
2,00 % Essigsäure
6,00 % Sebacinsäure
15,00 % ethoxyliertes Cocosfettamin
34,65 % Wasser
(= 6,25 % Cu-HDO)
4 % Anwendungskonzentration = 28,60 kg Konzentrat/m³
- Prüfzeitraum :: 2 Wochen
- Angriff :: Kein Angriff
- überlebende Tiere :: 0

### Beispiel 3

7,50 % Cu(OH)₂CuCO₃
18,75 % Isooctansäure
4,80 % K-HDO
1,90 % Milchsäure
3,00 % Borsäure
9,75 % 1,3-Diaminopropan
7,50 % Dimethyl-C₁₂-C₁₄-alkylamin
5,00 % Tridemorph
2,50 % 2-Ethylhexansäure
7,50 % ethoxyliertes Cocosfettamin
31,80 % Wasser
4 % Anwendungskonzentration = 28,7 kg Konzentrat/m³
- Prüfzeitraum :: 4 Wochen
- Angriff :: eine kleine Nagespur
- überlebende Tiere :: 0

### Beispiel 4

5,0 % Cu(OH)₂CuCO₃
12,5 % Isooctansäure
3,2 % K-HDO
1,3 % Milchsäure
2,0 % Borsäure
6,5 % 1,3-Diaminopropan
15,0 % Dimethyl-C₁₂-C₁₄-alkylamin
10,0 % Tridemorph
5,0 % 2-Ethylhexansäure
5,0 % Sebacinsäure
10,0 % ethoxyliertes Cocosfettamin
24,5 % Wasser

4 % Anwendungskonzentration = 28,9 kg Konzentrat/m³
- Prüfzeitraum :: 2 Wochen
- Angriff :: klein Angriff
- überlebende Tiere :: 0

### Beispiel 5

6,70 % Cu(OH)₂CuCO₃
16,70 % 2-Ethylhexansäure
4,30 % K-HDO
2,70 % Borsäure
1,70 % Milchsäure
4,50 % 1,3-Diamonopropan
5,00 % Dipropylentriamin
10,00 % Dimethyl-C₁₂-C₁₄-alkylamin
6,67 % Methyl-C₈-C₁₀-dialkylamin
3,33 % Isooctansäure
3,33 % Sebacinsäure
10,00 % ethoyliertes Cocosfettamin
25,07 % Wasser

3 % Anwendungskonzentration = 21,5 kg Konzentrat/m³
- Prüfzeitraum :: 2 Wochen
- Angriff :: klein Angriff
- überlebende Tiere :: 0

### Beispiel 6

4,5 % Cu(OH)₂
12,5 % 2-Ethylhexansäure
3,2 % K-HDO
1,3 % Milchsäure
2,0 % Borsäure
8,0 % Dipropylentriamin
15,0 % Dimethyl-C₁₂-C₁₄-alkylamin
10,0 % Fenpropimorph
5,0 % Sebacinsäure
15,0 % ethoxyliertes Cocosfettamin
23,5 % Wasser
4 % Anwendungskonzentration = 28,7 kg Konzentrat/m³
- Prüfzeitraum :: 2 Wochen
- Angriff :: kein Angriff
- überlebende Tiere :: 0

### Beispiel 7

6,0 % Cu(OH)₂
16,7 % Isooctansäure
4,3 % K-HDO
2,7 % Borsäure
10,0 % Dipropylentriamin
5,0 % Laurylpropylendiamin
10,0 % Dimethyl-C₁₂-C₁₄-alkylamin
6,7 % Tridemorph
6,7 % 2-Ethylhexansäure
5,0 % ethoxylisiertes Cocosfettamin
26,9 % Wasser
3 % Anwendungskonzentration = 21,9 kg Konzentrat/m³
- Prüfzeitraum :: 2 Wochen
- Angriff :: klein Angriff
- überlebende Tiere :: 0

### Beispiel 8

6,75 % Cu(OH)₂
18,75 % Isooctansäure
4,80 % Borsäure
11,75 % Dipropylentriamin
7,50 % Dimethyl-C₁₂-C₁₄-alkylamin
6,50 % N,N-Bis-(3-aminopropyl)-laurylamin
7,50 % 2-Ethylhexansäure
34,45 % Wasser
4 % Anwendungskonzentration = 28,1 kg Konzentrat/m³
- Prüfzeitraum :: 2 Wochen
- Angriff :: klein Angriff
- überlebende Tiere :: 0

### Beispiel 9

7,5 % CuO
28,0 % 2-Ethylhexansäure
13,0 % Dipropylentriamin
5,0 % Tridemorph
7,5 % Dimethyl-C₁₂-C₁₄-alkylamin
2,3 % Milchsäure
12,5 % ethoxyliertes Nonylphenol EO ca. 10
24,2 % Wasser

4 % Anwendungskonzentration = 28,3 kg Konzentrat/m³
- Prüfzeitraum :: 4 Wochen
- Angriff :: 1 leichte Nagenspur
- überlebende Tiere :: 0

### Beispiel 10

7,5 % CuO
28,0 % Isooctansäure
13,0 % Dipropylentriamin
5,0 % Tridemorph
7,5 % Dimethyl-C₁₂-C₁₄-alkylamin
2,3 % Milchsäure
12,5 % ethoxyliertes Nonylphenol EO ca. 10
24,2 % Wasser
4 % Anwendungskonzentration = 28,6 kg Konzentrat/m³
- Prüfzeitraum :: 3 Wochen
- Angriff :: klein Angriff
- überlebende Tiere :: 0

## Patentansprüche

1. Holzschutzmittel auf der Grundlage eines Kupfersalzes, dadurch gekennzeichnet, daß es
a) ein Kupfersalz einer Säure,
b) ein Polyamin und
c) ein Fettamin enthält, außer der Mischung aus Kupferhydroxid, N,N'-dioctyl--diethylentriamin, N,N',N''-trioctyl-diethylentriamin, N-Lauryl-N,N-dimethyl-N-benzyl-ammoniumchlorid und Essigsäure.

2. Holzschutzmittel nach Anspruch 1, enthaltend ein Kupfersalz einer wasserunlöslichen aliphatischen Carbonsäure.

3. Holzschutzmittel nach Anspruch 1, enthaltend Bis-(N-Cyclohexyl-diazeniumdioxy)-Kupfer.

4. Holzschutzmittel nach Anspruch 1, enthaltend Dipropylentriamin.

5. Holzschutzmittel nach Anspruch 1, enthaltend Diethylentriamin.

6. Holzschutzmittel nach Anspruch 1, enthaltend 1,3-Diaminopropan.

7. Holzschutzmittel nach Anspruch 1, enthaltend N,N-Dimethyl-N-(C₁₂-C₁₄-Alkyl)-amin.

8. Verfahren zum Schutz von Holz gegen Termiten, dadurch gekennzeichnet, daß man das Holz mit einem Holzschutzmittel gemäp Anspruch 1 behandelt.

9. Imprägnierlösung zum Schutz von Holz, hergestellt durch Verdünnung eines Holzschutzmittels gemäp Anspruch 1 mit Wasser.

10. Verfahren zum Schutz von Holz gegen Termiten, dadurch gekennzeichnet, daß man das Holz mit einer wäßrigen Imprägnierlösung imprägniert, die durch Verdünnung eines Holzschutzmittels gemäß Anspruch 1 mit Wasser hergestellt worden ist.

## Claims

1. A wood preservative based on a copper salt, which contains
a) a copper salt of an aicd,
b) a polyamine and
c) a fatty amine, except for the mixture of copper hydroxide, N,N'-dioctyl-diethylenetriamine, N,N'N''-trioctyldiethylenetriamine, N-lauryl-N,N-dimethyl-N-benzylammonium chloride and acetic acid.

2. A wood preservative as claimed in claim 1, containing a copper salt of a water-insoluble aliphatic carboxylic acid.

3. A wood preservative as claimed in claim 1, containing bis-(N-cyclohexyldiazeniumdioxy)-copper.

4. A wood preservative as claimed in claim 1, containing dipropylenetriamine.

5. A wood preservative as claimed in claim 1, containing diethylenetriamine.

6. A wood preservative as claimed in claim 1, containing 1,3-diaminopropane.

7. A wood preservative as claimed in claim 1, containing N,N-dimethyl-N-(C₁₂-C₁₄-alkyl)-amine.

8. A process for preserving wood from termites, wherein the wood is treated with a wood preservative as claimed in claim 1.

9. An impregnating solution for preserving wood, prepared by diluting a wood preservative as claimed in claim 1 with water.

10. A process for preserving wood from termites, wherein the wood is impregnated with an aqueous impregnating solution which has been prepared by diluting a wood preservative as claimed in claim 1 with water.

## Revendications

1. Agent de protection du bois à base d'un sel de cuivre, caractérisé par le fait qu'il contient
a) un sel de cuivre d'un acide
b) une polyamine et
c) une amine grasse
à l'exception du mélange d'hydroxyde de cuivre, de N,N'-diotyl--diéthylentriamine, N, N', N''-trioctyl-diéthylène-triamine, de chlorure de N-laury-N,N-diméthyl-N-benzylamonium et de l'acide acétique.

2. Agent de protection du bois selon la revendication 1 contenant un sel de cuivre d'un acide carboxylique aliphatique insoluble dans l'eau.

3. Agent de protection du bois selon la revendication 1 contenant du bis-(N-cyclohexyl-diazeniumdioxy)-cuivre.

4. Agent de protection du bois selon la revendication 1 contenant de la dipropylène triamine.

5. Agent de protection du bois selon la revendication 1, contenant de la diéthylènetriamine.

6. Agent de protection du bois selon la revendication 1, contenant du 1,3-diaminopropane.

7. Agent de protection du bois selon la revendication 1, contenant de la N,N-diméthyl-N-(alkyle en C12-C14)-amine.

8. Procédé pour la protection du bois contre les termites, caractérisé par le fait qu'on traite le bois avec un agent de protection du bois selon la renvendication 1.

9. Solution d'imprégnation pour la protection du bois, obtenue par dilution d'un agent de protection du bois selon la revendication 1 avec de l'eau.

10. Procédé pour la protection du bois contre les termites, caractérisé par le fait qu'on imprègne le bois avec une solution d'imprégnation aqueuse qui a été obtenue par dilution d'un agent de protection du bois selon la revendication 1 avec de l'eau.
